# EUROPEAN PATENT APPLICATION

(11) **EP 4 474 769 A1**
(43) Date of publication of application: **11.12.2024**
(21) Application number: 24179528.5
(22) Date of filing: 03.06.2024
(51) Int. Cl.: G01C 21/34, G06Q 30/0645, G08G 1/123

(54) **ARRIVAL-TIME-INDEX CALCULATION SYSTEM AND MOBILE BODY MANAGEMENT SYSTEM**

(30) Priority: 10.06.2023 JP 2023095924
(71) Applicant: Alps Alpine Co., Ltd., Ota-ku, Tokyo 145-8501 (JP)
(72) Inventor: Suto, Shuichi, Tokyo (JP)
(74) Representative: Schmitt-Nilson Schraud Waibel Wohlfrom Patentanwälte Partnerschaft mbB

(57) **Abstract**

An arrival-time-index calculation system includes a representative-point setting part configured to set a target-location representative point in a first zone and a mobile-body representative point in a second zone, and an index-value calculator configured to calculate an estimated arrival time to a destination of a traveling route as an index value of an arrival time of each of the plurality of mobile bodies, which are in the second zone and whose destinations are set in the first zone, to the destination. The first zone includes at least one destination, and the second zone is a zone in which a plurality of mobile bodies whose destinations are set in the first zone are located. The traveling route is searched by setting a current time as a departure time, setting the mobile-body representative point as a departure point, and setting the target-location representative point as the destination.

## Description

This patent application is based on and claims priority to Japanese Patent Application No. 2023-095924 filed on June 10, 2023.

The present disclosure mainly relates to technologies of assisting in returning rented mobile bodies, such as rental cars.

As a technology of assisting in returning a rental car, the following technology is known. A navigation device mounted in the rental car searches for a route to a returning location using map data installed in the navigation device, calculates an estimated arrival time to the returning location when the rental car is driven on the searched route, and outputs a message prompting a user of the rental car to extend a returning deadline when the estimated arrival time does not meet the returning deadline (see, for example, Japanese Unexamined Patent Application Publication No. 2009-270960).

As a technique for assisting in returning a rental car, the following technique is known. A rental car management server manages a location of each rental car by collecting a current location of each rental car from a terminal mounted in each rental car via transmission. The rental car management server calculates a required driving time from the current location of each rental car to a returning location, and outputs a message to a user of each rental car indicating that a returning deadline is approaching when the time obtained by subtracting the current time from the returning deadline is not long enough for the estimated driving time (see, for example, Japanese Unexamined Patent Application Publication No. 2004-295392).

In the above technique of assisting in returning a rental car through searching a route to a returning location using a navigation device mounted in the rental car, map data and a navigation device are required for each rental car. As the number of rental cars increases, the technical effort and, thus, cost required for installing navigation devices increases.

In the above technique of assisting in returning a rental car using the rental car management server, in order to accurately calculate a required driving time of each rental car, a route from a location of a rental car to a returning location of the rental car is searched using map data, and then the required driving time on the route needs to be calculated. In this case, a data processing volume and time for the map data depends on the number of rental cars. As the number of rental cars increases, the processing volume required for the map data increases. Thus, generally, as the number of rental cars increases, a required data processing volume also increases.

Therefore, it is conceivable that a rental car management server acquires a required driving time for each rental car to a returning location by requesting searching of a route and calculation of a required driving time to an external map service server providing route searching and required drive time calculation services. In this case, a processing volume of the map service server according to the number of requests made is incurred. As the number of rental cars increases, the data processing volume and processing cost of the map service, e.g. provided by a map service server, increases.

Therefore, an object of the present invention is to provide an arrival-time-index calculation system and a mobile body management system capable to assist in returning rented mobile bodies with high accuracy at a relatively low data processing volume, e.g. required in a vehicle-location information management server.

The present disclosure relates to an arrival-time-index calculation system and a mobile body management system according to the appended claims. Embodiments are disclosed in the dependent claims.

One aspect of the present disclosure provides an arrival-time-index calculation system that is configured to calculate an index value of an arrival time of a plurality of mobile bodies to a destination set for each of the plurality of mobile bodies. The arrival-time-index calculation system includes a representative-point setting part configured to set a target-location representative point in a first zone and a mobile-body representative point in a second zone, and an index-value calculator or calculation unit configured to calculate an estimated arrival time to a destination of a traveling route as an index value of an arrival time of each of the plurality of mobile bodies, which are in the second zone and whose destinations are set in the first zone, to the destination. The first zone includes at least one destination, and the second zone is a zone in which a plurality of mobile bodies whose destinations are set in the first zone are located. The traveling route is searched by setting a current time as a departure time, setting the mobile-body representative point as a departure point, and setting the target-location representative point as the destination.

Other objects and further features of the present invention will be apparent from the following detailed description when read in conjunction with the accompanying drawings, in which:
Fig. 1 is a block diagram depicting an example of a configuration of a vehicle management system according to an embodiment of the present disclosure;
Fig. 2 is a diagram depicting an example of a configuration of a vehicle terminal according to an embodiment of the present disclosure;
Fig. 3 is a block diagram depicting an example of a configuration of a vehicle-location information management server according to an embodiment of the present disclosure;
Fig. 4 is a diagram depicting a mesh used in a returning alert process according to an embodiment of the present disclosure;
Fig. 5 is a flow chart depicting an example of a target-vehicle-mesh setting process according to an embodiment of the present disclosure;
Fig. 6 is a flowchart depicting an example of a screening process according to an embodiment of the present disclosure;
Fig. 7 is a flow chart depicting an example of a detailed determination process according to an embodiment of the present disclosure; and
Figs. 8A and 8B are diagrams each depicting a processing example of the returning alert process according to an embodiment of the present disclosure.

In the arrival-time-index calculation system, when the first zone includes a plurality of destinations, the representative-point setting part may be configured to set a center of the plurality of destinations as the target-location representative point, and may be configured to set, as the mobile-body representative point, a center of the plurality of mobile bodies which are in the second zone and whose destinations are in the first zone.

According to the above arrival-time-index calculation system, an approximate arrival time to a destination of each mobile body whose destination in the first zone is set can be calculated as an index value of the arrival time by using a route search only once. The approximate arrival time is an approximate arrival time when the mobile body departs for the destination at a current time as a departure time. In order to achieve the above object, according to one aspect of the present disclosure, the mobile body management system, which is configured to manage returning deadlines of rented mobile bodies, includes a management server configured to manage a location and a returning deadline of each of a plurality of mobile bodies. The management server includes a screening part and a returning-delay risk determination part. Among the zones predetermined by dividing a target geographical range, a zone in which at least one store that is a returning location of each of the plurality of mobile bodies is located as a store-containing zone, and zones in which the plurality of mobile bodies whose returning location is the store in the store-containing zone are located as mobile body-containing zones. The screening part is configured to set a store representative point in the store-containing zone, set a mobile-body representative point in each of the mobile body-containing zones, acquire an estimated arrival time to a destination of a traveling route searched by setting a current time as a departure time, the mobile-body representative point as a departure point, and the store representative point of the store-containing zone as the destination, and from the mobile bodies which are in the mobile body-containing zones and whose returning locations are the at least one store in the store-containing zone, extract one or more mobile bodies whose time margin between the acquired estimated arrival time and a returning deadline is smaller than a predetermined level. Moreover, the returning-delay risk determination part is configured to acquire an estimated arrival time of each of the one or more mobile bodies extracted by the screening part to a destination of a traveling route searched by setting a current time as a departure time, a location of each of the one or more mobile bodies as a departure point, and the store that is a returning location of each of the one or more mobile bodies as a destination, and determine absence or presence of an arisen risk of returning delay of each of the one or more mobile bodies based on a time margin between the acquired estimated arrival time and the returning deadline of a corresponding mobile body of the one or more mobile bodies.

The mobile body management system may further include a mobile body terminal mounted in each of the plurality of mobile bodies and capable of communicating with the management server. The management server may further include an alert part that causes the mobile body terminal of each of the one or more mobile bodies, which are determined as having the arisen risk of returning delay by the returning-delay risk determination part, to alert and warn a user of each of the one or more mobile bodies of a returning delay.

In the above mobile body management system, when the store-containing zone contains a plurality of stores, the screening part may be configured to set a center of the plurality of stores as the store representative point.

In the above mobile body management system, for each of mobile body-containing zones being the mobile body-containing zone, when a plurality of mobile bodies whose returning locations are the at least one store in the store-containing zone are located in the mobile body-containing zone, the screening part may be configured to set a center of the locations of the plurality of mobile bodies as the mobile-body representative point of the mobile body-containing zone.

In the above mobile body management system, the screening part may be configured to set a center of the store-containing zone as the store representative point. In the above mobile body management system, the screening part may be configured to set a center of each of the mobile body-containing zones as the mobile-body representative point of a corresponding mobile body-containing zone of the mobile body-containing zones.. In the above mobile body management system, the screening part may be configured to set, among the at least one store in the store-containing zone, the store that is the most distant from the mobile body-containing zone or a mobile-body representative point set in the mobile body-containing zone as a store representative point used for the mobile body-containing zone, and for each of mobile body-containing zones being the mobile body-containing zone, acquire an estimated arrival time to a destination of a traveling route searched for the mobile body-containing zone by setting a current time as a departure time, the mobile-body representative point as a departure point, and the store representative point of the mobile body-containing zone as the destination.

In the above mobile body management system, the screening part may be configured to set a mobile-body representative point in each of the mobile body-containing zones, and set, among the plurality of mobile bodies whose returning locations are the at least one store in the store-containing zone, the location of the mobile body that is most distant from the store-containing zone or the store representative point set in the store-containing zone as the mobile-body representative point of a corresponding mobile-body containing zone of the mobile body-containing zones.

In the above mobile body management system, the screening part may be configured to acquire an estimated arrival time to a destination of a traveling route searched by setting a current time as a departure time, the mobile-body representative point as a departure point, and the store representative point of the store-containing zone as the destination using a service that searches a route and an estimated arrival time of the searched route, which is provided by an external service server. The returning-delay risk determination part may be configured to acquire an estimated arrival time to a destination of a traveling route searched by setting a current time as a departure time, a location of the mobile body as a departure point, and a store that is a returning location of the mobile body as the destination using the service provided by the external service server.

The screening part may be configured to, among the zones predetermined by dividing the geographical range, determine zones in which the at least one store that is a returning location of one or more corresponding mobile bodies of the plurality of mobile bodies is located as store-containing zones, and zones in which the plurality of mobile bodies whose returning locations are the at least one store in a corresponding store-containing zone of the store-containing zones are located as mobile-body containing zones of the corresponding store-containing zone. Moreover, the screening part may be configured to acquire an estimated arrival time to a destination of a traveling route searched by setting a store representative point in the corresponding store-containing zone, setting a mobile-body representative point in each of the mobile body-containing zones of the corresponding store-containing zone, setting a current time as a departure time, setting the mobile-body representative point as a departure point, and setting the store representative point of the corresponding store-containing zone as the destination. Further, the screening part may be configured to extract, from the mobile bodies which are located in said each of the mobile body-containing zones and whose returning locations are the at least one store in the corresponding store-containing zone, one or more mobile bodies whose time margin between the acquired estimated arrival time and a returning deadline of a corresponding mobile body of the one or more mobile bodies is smaller than a predetermined level.

Using the above-described mobile body management system, a route search is used one time for each of the mobile body-containing zones in which the mobile bodies whose returning stores are in one store-containing zone are located to acquire an approximate arrival time to the returning store of each of the mobile bodies whose returning locations are the stores in the one store-containing zone at a current time as a departure time. The mobile bodies each having a time margin between the approximate arrival time and the returning deadline smaller than the predetermined level are extracted. Then, an estimate arrival time for the each of the extracted mobile bodies is precisely determined using a route search in a case where each of the extracted mobile bodies departs for the returning store at a current time as a departure time to determine presence or absence of an arisen risk of returning delay.

Accordingly, presence or absence of a risk of returning delay can be determined with a smaller data processing volume as the number of times the route search is performed is smaller compared with a case where a route is searched for each individual mobile body, but with a comparable accuracy with the case where the route is searched for each individual mobile body.

Embodiments of the present disclosure will be described hereinafter. According to an embodiment, the mobile bodies, as described herein, are respective vehicles, such as automobiles. According to an embodiment, the mobile body management system as described herein is a vehicle management system.
According to an embodiment, a map service is provided by a map service server, e.g. of an external service provider.
Particularly, each of the functional components, entities and devices of the systems as described herein, or at least parts thereof, are computer-implemented. For example, each of the functional components, entities and devices as claimed and/or shown in the Figures comprise one or more parts or units which are computer-implemented by hardware and/or software to perform the respective functions as described herein. Likewise, a server as described herein comprises one or more parts which are computer-implemented by hardware and/or software to perform the respective functions.

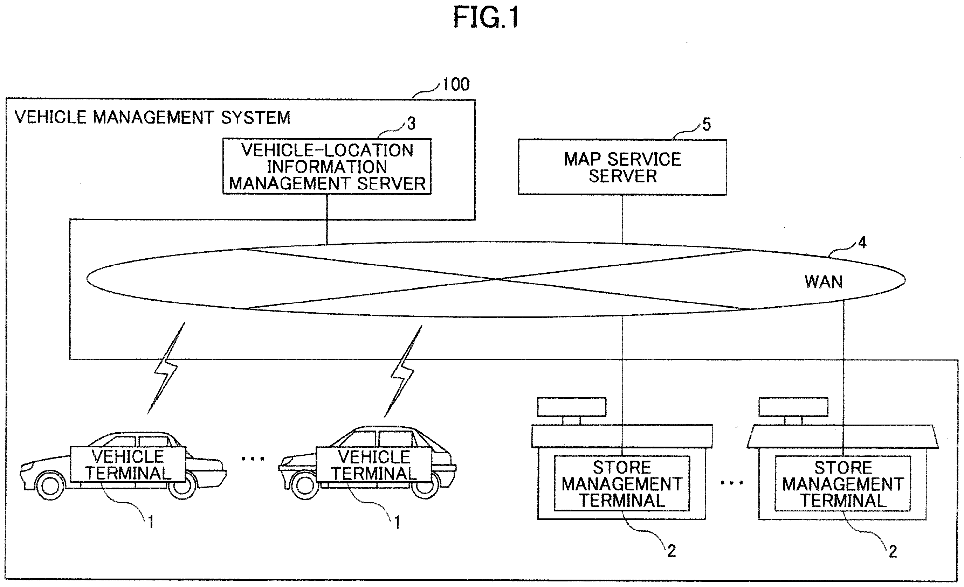

Fig. 1 illustrates an example of a configuration of a computer-implemented vehicle management system 100 according to one embodiment of the present disclosure.

As illustrated in Fig. 1, a vehicle management system 100 includes a vehicle terminal 1 mounted in each of vehicles used as rental cars, a store management terminal 2 installed in each of stores that are renting and returning locations for the rental cars, and a vehicle-location information management server 3.

The vehicle terminal 1 and the vehicle-location information management server 3 can communicate with each other via WAN4 constituted by using a mobile communication network or internet. The store management terminal 2 and the vehicle-location information management server 3 can communicate with each other via WAN4 constituted by using a mobile communication network or internet.

Moreover, the vehicle-location information management server 3 can use a service of an external map service server 5 via WAN4. The map service server 5 provides map services, such as providing map information, calculating an estimated arrival time or estimated duration of a travel, and the like.

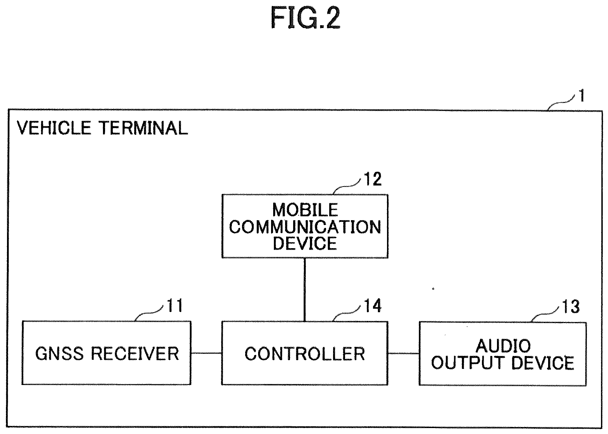

Next, a configuration of the vehicle terminal 1 is illustrated in Fig. 2.

The vehicle terminal 1 is a terminal that is mounted in a rental car in a stationary manner, or is rented to a user from each store together with a rental car and then mounted in the rental car.

As illustrated, the vehicle terminal 1 includes a receiver, such as a GNSS receiver 11, configured to measure a location of the vehicle by satellite navigation, a mobile communication device 12 enabling mobile communication, an output device, such as an audio output device 13, configured to output visual and/or voice messages, and a controller 14 configured to control the foregoing devices.

The controller 14 is configured to, e.g. periodically, transmit a location measured by the receiver 11 to the vehicle-location information management server 3 through mobile communication, e.g. via WAN4, using the mobile communication device 12.

Once an instruction to output a returning alert is received from the vehicle-location information management server 3, the controller 14 is configured to control the output device 13 to output a notice, e.g. a voice or visual message, to suggest returning of a rental car, such as "a deadline for returning your rental car is approaching." A display device may be disposed on the vehicle terminal 1, and the controller 14 may control the display device to display an alert or warning for approaching of a deadline instead of or in combination with output of the voice message, when an instruction to output a returning alert is received.

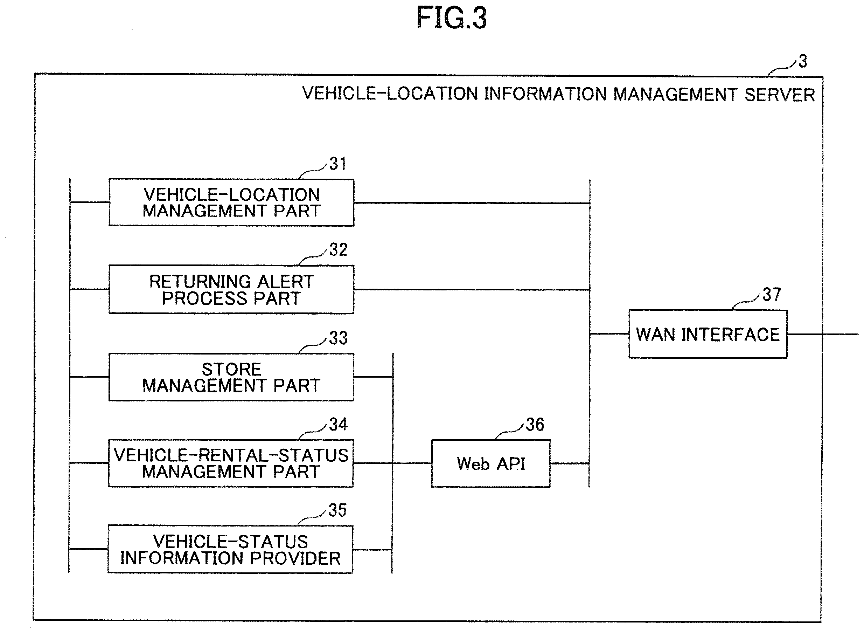

Next, a configuration of the vehicle-location information management server 3 is illustrated in Fig. 3.

As illustrated, the computer-implemented vehicle-location information management server 3 includes a vehicle-location management part 31, a returning alert process part 32, a store management part 33, a vehicle-rental-status management part 34, a vehicle-status information provider 35, a Web API 36 that allows the store management terminal 2 to use the store management part 33, the vehicle-rental-status management part 34, and the vehicle-status information provider 35 as a browser-based system, and a WAN interface 37 that allows communication between the above parts via WAN4.

The vehicle-location management part 31 is configured to manage a current location of each of rental cars based on the measured location transmitted from the vehicle terminal 1 of each of the rental cars.

The returning alert process part 32 is configured to perform a returning alert process, which includes detection of the rental car to which a risk of returning delay is arisen, instruction to the vehicle terminal 1 of the detected rental car to output a returning alert, and registration of the arisen risk of returning delay of the detected rental car with the vehicle-rental-status management part 34. The store management part 33 receives and manages the registered information from each of the stores, such as names and locations, using the store management terminal 2.

The vehicle-rental-status management part 34 receives a rental period including a returning deadline, a returning store, and presence or absence of returning, which are set for each rental car by the store management terminal 2, and manages the presence or absence of each of the rental cars in use, and the rental period or returning store of each of the rental cars in use.

Moreover, the vehicle-rental-status management part 34 manages a status of each rental car, such as an overdue period when a returning deadline is passed, the risk of returning delay registered by the returning alert process part 32, and the like.

Next, the vehicle-status information provider 35 transmits a management screen displaying a list of status of each rental car managed by the vehicle-rental-status management part 34 to the store management terminal 2 to be displayed on the store management terminal 2. Moreover, the vehicle-status information provider 35 transmits a map screen depicting a current location of the designated rental car managed by the vehicle-location management part 31 according to an operation of the store management terminal 2 to be displayed on the store management terminal 2.

Once an arisen risk of returning delay is registered by the returning alert process part 32, the vehicle-status information provider 35 outputs an alert for an arisen risk of returning delay of a rental car to the store management terminal 2 to be displayed as a pop-up window or the like in a manner such that the rental car can be identified.

The store management terminal 2 includes a Web browser that allows the vehicle-location information management server 3 to be used as a browser-based system.

The returning alert process periodically performed by the returning alert process part 32 of the vehicle-location information management server 3 will be described hereinafter.

First, meshes used in the returning alert process will be described.

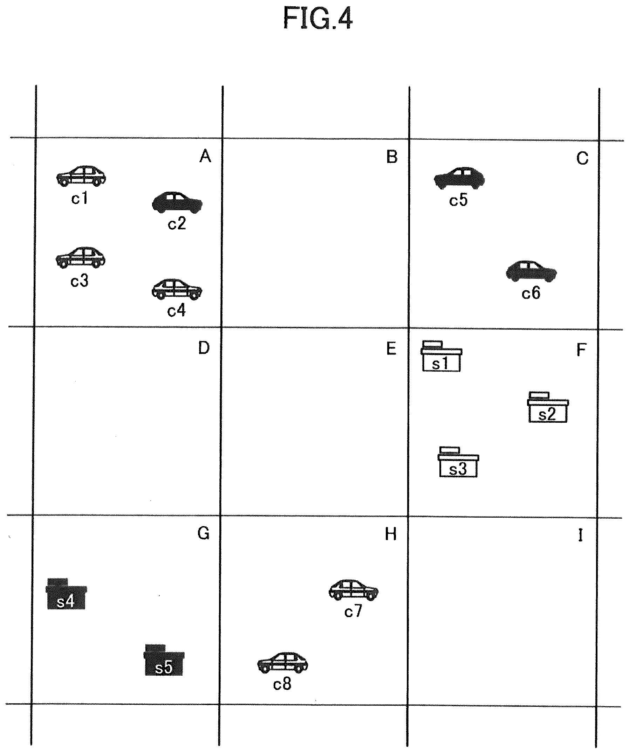

An example of the meshes are illustrated in Fig. 4.

As illustrated, the meshes are squares obtained by dividing the target geographical range of the vehicle management system 100 by a predetermined area (e.g., 10 km × 10 km) in the latitude and longitude directions. Fig. 4 includes nine meshes from A to I.

Each of stores or each of rental cars is located within one of the meshes. In the illustrated example, the stores s1, s2, and s3 are located in the mesh F, and the stores s4 and s5 are located in the mesh G. Moreover, the rental cars c1, c2, c3, and c4 are located in the mesh A, the rental cars c5 and c6 are located in the mesh C, and the rental cars c7 and c8 are located in the mesh H.

In Fig. 4, the returning locations of the rental cars c1, c3, c4, c7, and c8, which are illustrated in white, are the store s1, s2, or s3 in the mesh F, the returning locations of the rental car c2, c5, and c6, which are illustrated in black, are the store s4 or s5 in the mesh G, and the returning location of the rental car c3 is the store s3 in the mesh F.

The returning alert process is performed in the following manner based on the location of each of the stores managed by the store management part 33, the location of each of the rental cars managed by the vehicle-location management part 31, and the returning store and returning deadline of each of the rental cars managed by the vehicle-rental-status management part 34.

Specifically, in the returning alert process, all the meshes in which the stores are present are determined as target store meshes, and a target-vehicle-mesh setting process is performed on each of the target store meshes.

In the case of Fig. 4, the meshes in which the stores are located are the mesh F and the mesh G. Therefore, a target-vehicle-mesh setting process using the mesh F as the target store mesh, and a target-vehicle-mesh setting process using the mesh G as the target store mesh are both performed.

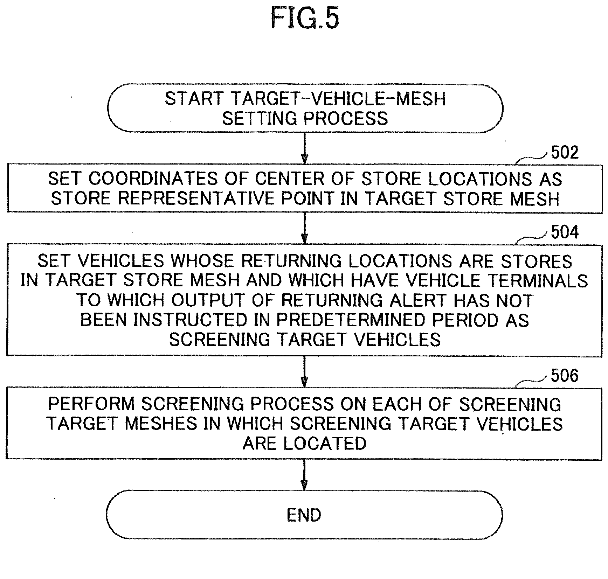

Fig. 5 depicts the procedure of the target-vehicle-mesh setting process.

As illustrated, in the target-vehicle-mesh setting process, coordinates of the center of the locations of the stores in the target store mesh is set as a store representative point (step 502). The coordinates of the center of the locations of the store can be determined as an average of coordinates of the locations of the stores.

Next, among the rented rental cars whose returning locations are the stores in the target store mesh, the rental cars having the vehicle terminals 1 to which output of returning alert has not been instructed in a predetermined period are set as screening target vehicles (step 504).

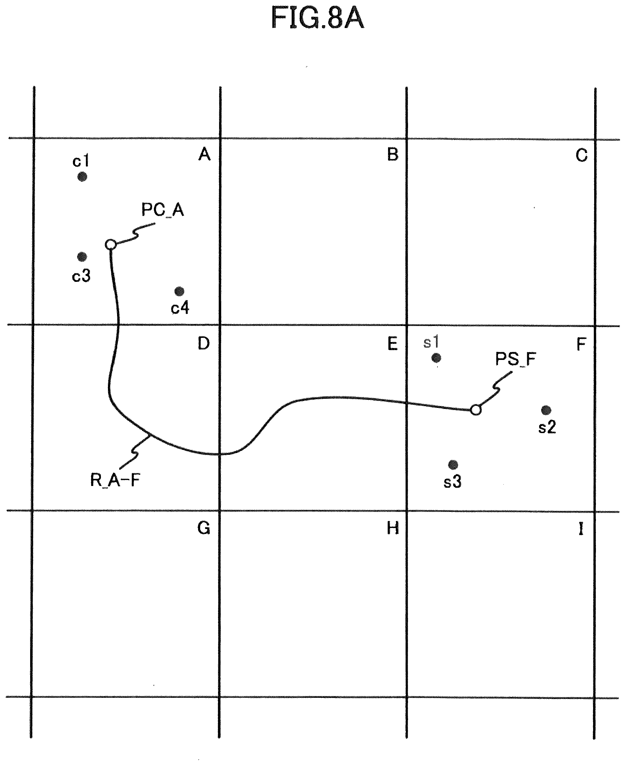

In a case where the target store mesh is, for example, the mesh F of Fig. 4 and the vehicle terminals 1 of all of the rental cars have not been instructed to output a returning alert in the predetermined period, the rental cars c1, c3, c4, c7, and c8 whose returning locations are any of the stores s1, s2, and s3 within the mesh F are screening target vehicles. As illustrated in Fig. 8A, the center of the stores s1, s2, and s3 is set as the store representative point PS_F.

Next, the meshes in each of which the screening target vehicles are located are set as the target vehicle meshes, and a screening process is performed on each of the target vehicle meshes (step 506). In the case where the rental cars c1, c3, c4, c7, and c8 of Fig. 4 are the screening target vehicles as described above, the mesh A and the mesh H, in which the screening target vehicles are located, are the target vehicle meshes. Therefore, a screening process on the mesh A as the target vehicle mesh and a screening process on the mesh H as the target vehicle mesh are both performed.

Once the screening process is completed on all of the target vehicle meshes, the target-vehicle-mesh setting process is ended.

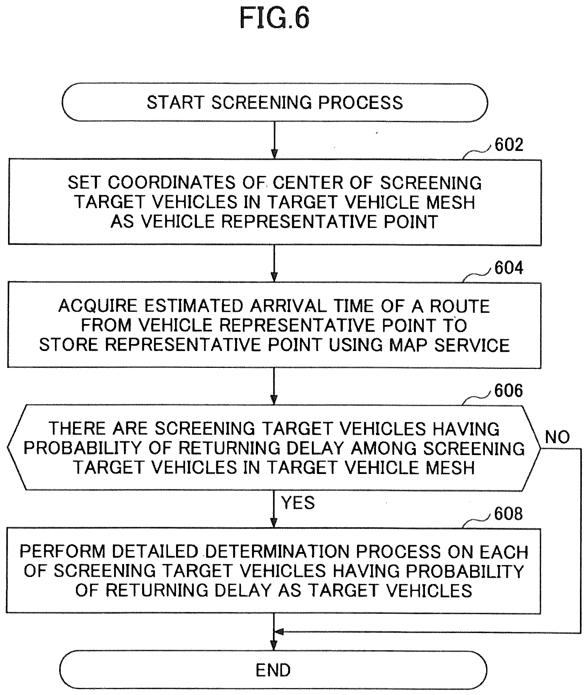

Next, the procedure of the screening process performed on each of the target vehicle meshes in the step 506 of the target-vehicle-mesh setting process will be described in Fig. 6.

As illustrated, in the screening process, the coordinates of the center of the locations of the screening target vehicles within the target vehicle mesh is set as a vehicle representative point (step 602). The coordinates of the center of the locations of the screening target vehicles are determined as an average of the coordinates of the locations of all screening target vehicles.

Then, a request of a route search is sent to the above-described external map service server 5 providing a map service by setting the vehicle representative point as a departure point, the store representative point as a destination, and a current time as a departure time, thereby acquiring an estimated arrival time of the route (step 604).

In the case where the mesh F of Fig. 4 is the target store mesh, the mesh A of Fig. 4 is the target vehicle mesh, and the screening target vehicles in the mesh A are rental cars c1, c3, and c4, a center of the rental cars c1, c3, and c4 is set as the vehicle representative point PC_A as illustrated in Fig. 8A. According to the request made, the map service server 5 searches a route R_A-F from the vehicle representative point PC_A to the store representative point PS_F of the target store mesh F, and calculates an estimated arrival time to the store representative point PS_F when a current time is a departure time, and the vehicle travels from the vehicle representative point PC_A to the store representative point PS_F on the route R_A-F, and the search and calculation results are provided to the returning alert process part 32.

The estimated arrival time indicates an approximate arrival time to each returning store when the rental cars c1, c3, and c4 depart for each returning store at a current time as a departure time. Therefore, the estimated arrival time can be used as an index value of the arrival time.

Once the estimated arrival time is acquired (step 604), whether or not there is any probability of returning delay of the vehicle is determined on each of the screening target vehicles in the target vehicle mesh based on the estimated arrival time (step 606). The screening target vehicle having the returning deadline that comes before the estimated arrival time + a predetermined time period is determined as the screening target vehicle having a probability of returning delay. The predetermined time period is a sufficient time period for diagonally traveling across the mesh from one corner of the mesh to the other corner of the mesh (e.g., 30 minutes, if a size of the mesh is 10 km × 10 km).

If there is no vehicle having a probability of returning delay among the screening target vehicles within the target vehicle mesh, the screening process is ended.

If there are screening target vehicles having a probability of a returning delay, all screening target vehicles having the probability of a returning delay are determined as target vehicles, and a detailed determination process is performed on each of the target vehicles (step 608).

In a case where the mesh F and the mesh A of Fig. 4 are the target store meshes and the screening target vehicles having a probability of a returning delay within the mesh A are the rental cars cl and c3, for example, a detailed determination process on the rental car c1 as the target vehicle and a detailed determination process on the rental car c3 as the target vehicle are both performed.

Once the detailed determination process is performed on all of the target vehicles, the screening process is ended.

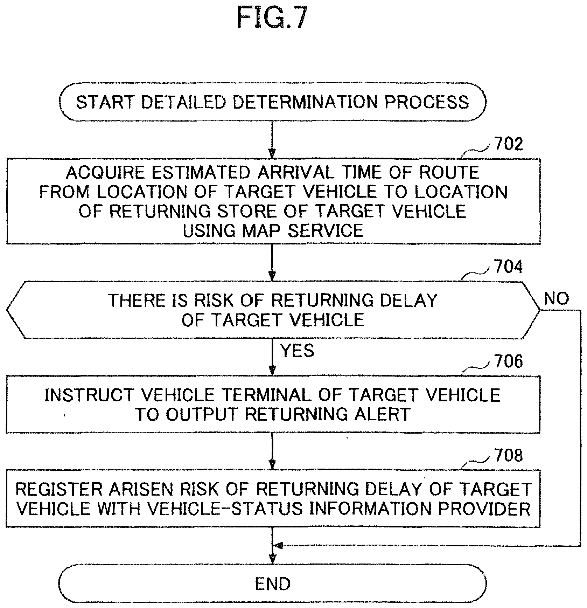

Next, the procedure of the detailed determination process performed on each of the target vehicles in the step 608 of the screening process is described in Fig. 7.

As illustrated, a request of a route search is sent to the above-described external map service server 5 providing a map service by setting the target vehicle as a departure point, the returning store of the target vehicle as a destination, and a current time as a departure time, thereby acquiring an estimated arrival time of the route (step 702).

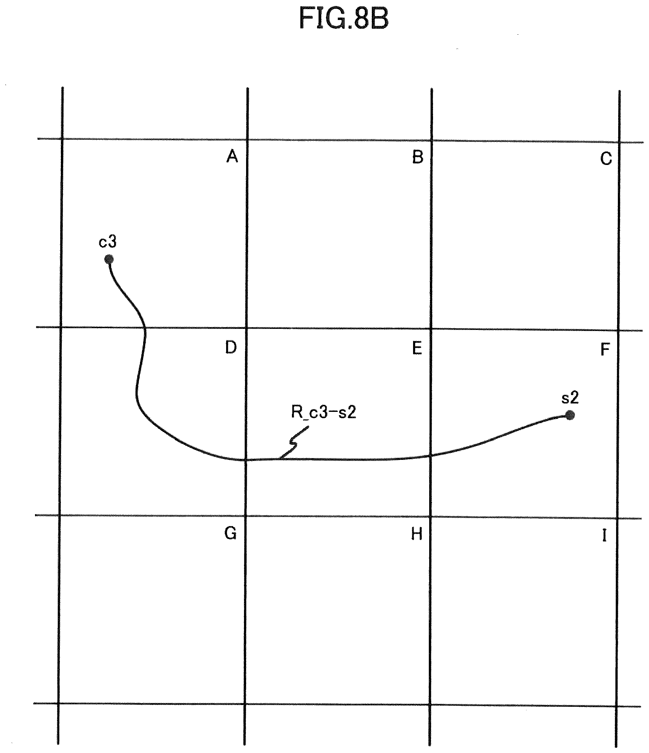

In the case where the rental car c3 of Fig. 4 is the target vehicle and the returning store of the rental car c3 is the store s2, for example, according to the request, the map service server 5 searches a route R_c3-s2 from the location of the rental car c3 to the store s2 as illustrated in Fig. 8B, calculates an estimated arrival time to the store s2 when a current time is a departure time and the vehicle travels from the location of rental car c3 to the store s2 on the route R_c3-s2, and provides the search and calculation results to the returning alert process part 32.

Referring back to Fig. 7, once the estimated arrival time is acquired (step 702), whether or not there is any arisen risk of returning delay is determined on the target vehicle (step 704). When the returning deadline of the target vehicle comes before the estimated arrival time + a duration of time margin, the target vehicle is determined as having a risk of returning delay. The time margin is, for example, a duration of from 0 minutes to approximately 10 minutes.

If the target vehicle involves no risk of returning delay, the detailed determination process is ended.

If there is a risk of returning delay, the vehicle terminal 1 of the target vehicle is instructed to output a returning alert (step 706). In addition, the arisen risk of returning delay for the target vehicle is registered with the vehicle-status information provider 35 (step 708), and then the detailed determination process is ended.

The vehicle terminal 1, which has been instructed to output a returning alert, outputs an audio message or display prompting returning of the rental car, such as "a returning deadline of your rental car is approaching," from the audio output device 13, as described above. Moreover, the vehicle-status information provider 35 with which the arisen risk of returning delay has been registered causes the store management terminal 2 to output an alert for the arisen risk of returning delay of the rental car as a pop-up window or the like in a manner such that the rental car that is the target vehicle can be identified.

The embodiments of the present disclosure have been described above.

The store representative point of the above embodiments may be a center of a target store mesh. Moreover, the vehicle representative point of the above embodiments may be a center of the target vehicle mesh.

Moreover, the vehicle representative point of the above embodiments may be a location of a screening target vehicle that is most distant from the store representative point or the target store mesh.

In the above embodiments, setting of a store representative point may not be performed in the target-vehicle-mesh setting process, and a store representative point may be set for each screening process performed on each target vehicle. Specifically, in each of the screening processes, the location of the store in the target store mesh, which is most distant from the vehicle representative point of the target vehicle mesh or the target vehicle mesh may be set as a store representative point.

In the present embodiments, as described above, a map service is used once per mesh in which rental cars whose returning locations are stores within one target store mesh are located (target vehicle mesh) to determine an approximate arrival time to the returning store of each of the rental cars in the target store mesh if the vehicle departs for the returning store at a current time as a departure time. Then, presence or absence of probability of returning delay of each of the rental cars is determined. Then, an estimated arrival time to the returning store is precisely determined using a map service only on each of the rental cars having probability of returning delay at a current time as a departure time, to determine presence or absence of an arisen risk of returning delay.

According to the present embodiments, therefore, the presence and absence of an arisen risk of returning delay can be determined with a smaller number of map service usages and thus less data processing volume compared with a case where presence or absence of an arisen risk of returning delay is determined using a map service per rental car, but with a comparative accuracy to the case where the map service is used per rental car.

In the above embodiments, the estimated arrival time is acquired using the map service provided by the external map service server 5 in the step 604 of the screening process of Fig. 6, and the step 702 of the detailed determination process of Fig. 7. However, functions of searching a route and calculating an estimated arrival time of the searched route may be imparted to the vehicle-location information management server 3 to calculate an estimated arrival time using the vehicle-location information management server 3 itself. In this case, presence and absence of an arisen risk of returning delay can be determined with less processing volume or capacity compared to a case when a route search and estimated arrival time calculation are performed on each of rental cars, but with a comparative accuracy with the case where a route search is performed on each of rental cars.

In the above embodiments, the example where locations or returning deadlines of rental cars are managed to inform users of rental cars or management operators about an arisen risk of returning delay is described. However, the present embodiments can be similarly applied for a case where locations and returning deadlines of any mobile bodies, which are rented and used, such as any type of vehicle, such as cars used for car sharing, rental motorcycles, rental bicycles, rental personal transporters, and the like, are managed to inform a user of a mobile body or a management operator about an arisen risk of returning delay of a mobile body.

As described above, the present disclosure can assist in returning of a rented mobile body with high accuracy at a relatively low data processing volume.

## Claims

1. An arrival-time-index calculation system configured to calculate an index value of an arrival time of a plurality of mobile bodies to a destination set for each of the plurality of mobile bodies, the arrival-time-index calculation system comprising:
a representative-point setting part configured to set a target-location representative point in a first zone, and set a mobile-body representative point in a second zone,
the first zone including at least one destination, and
the second zone being a zone in which a plurality of mobile bodies whose destinations are set in the first zone are located; and
an index-value calculation unit configured to calculate an estimated arrival time to a destination of a traveling route as an index value of an arrival time of each of the plurality of mobile bodies, which are in the second zone and whose destinations are set in the first zone, to the destination,
the traveling route being searched by setting a current time as a departure time, setting the mobile-body representative point as a departure point, and setting the target-location representative point as the destination.

2. The arrival-time-index calculation system according to claim 1,
wherein, when the first zone includes a plurality of destinations,
the representative-point setting part is configured to set
a center of the plurality of destinations as the target-location representative point, and
a center of the plurality of mobile bodies which are in the second zone and whose destinations are in the first zone as the mobile-body representative point.

3. A mobile body management system configured to manage returning deadlines of rented mobile bodies, the mobile body management system comprising:
a management server configured to manage a location and a returning deadline of each of a plurality of mobile bodies,
the management server including a screening part and a returning-delay risk determination part, and
the management server configured to determine, among zones predetermined by dividing a target geographical range, a zone in which at least one store that is a returning location of each of the plurality of mobile bodies is located as a store-containing zone, and zones in which the plurality of mobile bodies whose returning location is the store in the store-containing zone are located as mobile body-containing zones,
the screening part being configured to
set a store representative point in the store-containing zone,
set a mobile-body representative point in each of the mobile body-containing zones,
acquire an estimated arrival time to a destination of a traveling route searched by setting a current time as a departure time, setting the mobile-body representative point as a departure point, and setting the store representative point of the store-containing zone as the destination, and
from the mobile bodies which are in the mobile body-containing zones and whose returning locations are the at least one store in the store-containing zone, extract one or more mobile bodies whose time margin between the acquired estimated arrival time and a returning deadline is smaller than a predetermined level, and
the returning-delay risk determination part being configured to
acquire an estimated arrival time of each of the one or more mobile bodies extracted by the screening part to a destination of a traveling route searched by setting a current time as a departure time, a location of each of the one or more mobile bodies as a departure point, and the store that is a returning location of each of the one or more mobile bodies as a destination, and
determine absence or presence of an arisen risk of returning delay of each of the one or more mobile bodies based on a time margin between the acquired estimated arrival time and the returning deadline of a corresponding mobile body of the one or more mobile bodies.

4. The mobile body management system according to claim 3, further comprising:
a mobile body terminal mounted in each of the plurality of mobile bodies, and capable of communicating with the management server,
wherein the management server further includes an alert part that causes the mobile body terminal of each of the one or more mobile bodies, which are determined as having the arisen risk of returning delay by the returning-delay risk determination part, to alert and warn a user of each of the one or more mobile bodies of a returning delay.

5. The mobile body management system according to claim 3 or 4,
wherein, when the store-containing zone contains a plurality of stores,
the screening part is configured to set a center of the plurality of stores as the store representative point.

6. The mobile body management system according to one of claims 3 to 5,
wherein, for each of mobile body-containing zones being the mobile body-containing zone, when a plurality of mobile bodies whose returning locations are the at least one store in the store-containing zone are located in the mobile body-containing zone,
the screening part is configured to set a center of the locations of the plurality of mobile bodies as the mobile-body representative point of the mobile body-containing zone.

7. The mobile body management system according to one of claims 3 to 6,
wherein the screening part is configured to set a center of the store-containing zone as the store representative point.

8. The mobile body management system according to one of claims 3 to 7,
wherein the screening part is configured to set a center of each of the mobile body-containing zones as the mobile-body representative point of a corresponding mobile body-containing zone of the mobile body-containing zones.

9. The mobile body management system according to one of claims 3 to 8,
wherein the screening part is configured to
set, among the at least one store in the store-containing zone, the store that is the most distant from the mobile body-containing zone or a mobile-body representative point set in the mobile body-containing zone as a store representative point used for the mobile body-containing zone, and
for each of mobile body-containing zones being the mobile body-containing zone, acquire an estimated arrival time to a destination of a traveling route searched for the mobile body-containing zone by setting a current time as a departure time, the mobile-body representative point as a departure point, and the store representative point of the mobile body-containing zone as the destination.

10. The mobile body management system according to one of claims 3 to 9,
wherein the screening part is configured to set a mobile-body representative point in each of the mobile body-containing zones, and set, among the plurality of mobile bodies whose returning locations are the at least one store in the store-containing zone, the location of the mobile body that is most distant from the store-containing zone or the store representative point set in the store-containing zone as the mobile-body representative point of a corresponding mobile-body containing zone of the mobile body-containing zones.

11. The mobile body management system according to one of claims 3 to 10,
wherein the screening part is configured to acquire an estimated arrival time to a destination of a traveling route searched by setting a current time as a departure time, the mobile-body representative point as a departure point, and the store representative point of the store-containing zone as the destination using a service that searches a route and an estimated arrival time of the searched route, which is provided by an external service server, and
the returning-delay risk determination part is configured to acquire an estimated arrival time to a destination of a traveling route searched by setting a current time as a departure time, a location of the mobile body as a departure point, and a store that is a returning location of the mobile body as the destination using the service provided by the external service server.

12. The mobile body management system according to one of claims 3 to 11,
wherein the screening part is configured to
among the zones predetermined by dividing the geographical range, determine zones in which the at least one store that is a returning location of one or more corresponding mobile bodies of the plurality of mobile bodies is located as store-containing zones, and zones in which the plurality of mobile bodies whose returning locations are the at least one store in a corresponding store-containing zone of the store-containing zones are located as mobile-body containing zones of the corresponding store-containing zone,
acquire an estimated arrival time to a destination of a traveling route searched by setting a store representative point in the corresponding store-containing zone, setting a mobile-body representative point in each of the mobile body-containing zones of the corresponding store-containing zone, setting a current time as a departure time, setting the mobile-body representative point as a departure point, and setting the store representative point of the corresponding store-containing zone as the destination, and
extract, from the mobile bodies which are located in said each of the mobile body-containing zones and whose returning locations are the at least one store in the corresponding store-containing zone, one or more mobile bodies whose time margin between the acquired estimated arrival time and a returning deadline of a corresponding mobile body of the one or more mobile bodies is smaller than a predetermined level.
